Europäisches Patentamt

European Patent Office

Office européen des brevets

(19)

(11) **EP 1 126 729 A1**

(12) # EUROPEAN PATENT APPLICATION

(43) Date of publication:
**22.08.2001  Bulletin 2001/34**

(51) Int Cl.7: **H04N 17/00**

(21) Application number: **00830113.7**

(22) Date of filing: **18.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **STMicroelectronics S.r.l.**
**20041 Agrate Brianza (Milano) (IT)**

(72) Inventors:
• **Borneo, Antonio Maria**
  **75100 Matera (IT)**
• **Salinari, Lanfranco**
  **74011 Castellaneta (Taranto) (IT)**

(74) Representative: **Bosotti, Luciano et al**
  **Buzzi, Notaro & Antonielli d'Oulx**
  **Corso Fiume 6**
  **10133 Torino (IT)**

(54) **A process for estimating the noise level in sequences of images and a device therefor**

(57)     A process for estimating the noise level of a sequence of images comprises the operations of:

- producing a local estimate (16) of the noise level of the said images,
- creating (18) the histogram of the said estimate,
- deriving (20) at least one parameter of the said histogram, and

- determining (22), by calculation or by means of an empirical relation, at least one noise level parameter on the basis of the said at least one parameter derived from the histogram.

The corresponding device can be incorporated, for example, in an MPEG-2 encoder, where the parameter (NL) identifying the noise level is used for the adjustment of the internal variables of the encoding process.

Fig_3

**Description**

Technical field

The present invention relates to techniques for estimating noise level, particularly in digitized video sequences, in other words in sequences of images converted into numerical form.

An estimate of the noise level present in a video sequence (or, more briefly, its noise) is required in practically every existing filtering device, as shown, for example, in the paper by J.C. Brailean et al., "Noise reduction filters for dynamic image sequences: a review", Proc. IEEE, vol. 83, pp. 1270-1292, Sept. 1996, or in the paper by R.P. Kleihorst, "Noise filtering of image sequences", PhD Thesis TU-Delft, Information Theory Group, 1994.

This is because an awareness of the quantity of noise present in a sequence makes it possible to regulate the intensity of the filtering action. As the noise increases, the filtering action has to become more intense. Preferably, an estimate of this kind should be made automatically and should not be simply entrusted to a spectator or operator.

Description of the known art

US-A-5 715 000 proposes that the noise be estimated, in the case of filters for television sets, from the disturbance present when the analogue signal is at the black level, in other words in the horizontal or vertical return intervals (also known as the flybacks) of the electron beam.

This strategy is not applicable to all cases. In particular, it is not applicable, for example, to a digital television camera. Even if it were applicable, it would lose its usefulness in the case of clear reception of a transmitted sequence which is noisy; an example of this is an amateur film transmitted in a television news programme. Furthermore, many video recorders and pieces of video sequence processing equipment (including those used at repeaters) regenerate the black level to facilitate the latching of the subsequent devices in the display chain. Frequently, in order to make full use of the limited dynamics of magnetic tapes, the signal synchronizing pulses are not actually stored on them, but are generated in another way. Finally, with the advent of services such as teletext, the intervals in which the signal is at the black level are largely occupied by digital signals, making the implementation of the described method more complicated.

Another strategy for estimating the noise level is that of considering the variance of the image in the uniform areas of the image, for example as suggested in the paper by M.I. Sezan et al., "Temporally adaptive filtering of noisy image sequences using a robust motion estimation algorithm", in IEEE Proc. Int. Conf. Acoust., Speech, and Signal Proc., vol. 4, (Toronto, Canada), pp. 2429-2432, May 14-17, 1991.

The limitation of this system consists in the difficulty of understanding what the uniform areas are within an image. One possible method for identifying them is, theoretically at least, that of segmenting the image. However, most segmentation methods become less reliable as the power of the noise superimposed on the image increases. This occurs because segmentation devices operate as high-pass filters, and are therefore unable to distinguish between the variations due to the signal and those caused by the noise. Moreover, it is not uncommon to encounter images in which there are no uniform areas sufficiently large to allow a reliable estimate to be made.

The device described in US-A-5 657 401 is based on the accumulation of a certain quantity of estimates of the noise (in practice, the absolute values of differences between pixels adjacent to each other in space or in time). The device subsequently increases or decreases the value of a generic noise level (abbreviated to NL), according to the number of values of the sum of the absolute differences (the parameter commonly termed SAD, the abbreviation for "sum of absolute differences") that fall within a certain interval whose boundaries are determined according to the noise level estimated for the preceding frame. One of the limits of this estimator consists in the adaptation mechanism, which can behave in a different way from what is expected in the presence of abrupt changes of the noise level in the sequence. Another disadvantage which cannot be ignored is the fact that this estimator was designed to be integrated in a particular filtering device, described in the paper by G. de Haan et al., "Memory integrated noise reduction IC for television", IEEE Trans. On Consumer Electronics, May 1996, vol. 42, pp. 175-181.

Therefore, if this device were to be used in another filter, it would be necessary to correlate the required parameter at the input from the filter with the NL parameter found by the estimator; this is an operation which can be complicated.

In general, all the methods for estimating the noise level described above have been shown to be of low versatility, since they are limited, in respect of their application, to a particular filtering device, or because they are related to a particular process of acquiring and digitizing the sequence. This considerably reduces the possibilities for the application of these methods.

# EP 1 126 729 A1

Objects and summary of the present invention

The object of the present invention is therefore to provide a solution which can be distinguished from those described previously primarily by the wide range of possible applications.

According to the present invention, this object is achieved by means of a process having the characteristics claimed in a specific way in the following claims. The invention also relates to the corresponding device.

Briefly, the solution according to the invention makes it possible to produce an estimator of the noise level present in digitized video sequences based on motion compensation.

The device according to the invention can be connected in a noise filtering unit in order to regulate the intensity of the filtering action.

The solution according to the invention can be used advantageously within a pre-processing stage for MPEG-2 encoding.

The solution according to the invention is, however, also suitable for use in other areas, for example for up-conversion with compensation of the movement of the field frequency from 50 Hz to 100 Hz, a task which requires units for the estimation of the movement and for motion compensation.

The operation of the device according to the invention is based on two principal steps:

- collecting local estimates of the noise, and
- generating the histogram of the estimates collected in the first step, to obtain a reliable estimate of the noise level of the sequence.

The principal advantages of the solution according to the invention are its reliability and simplicity of implementation, which enable it to be provided for video applications in real time.

Brief description of the drawings

The invention will now be described, purely by way of example and without restriction, with reference to the attached drawings, in which:

- Figure 1 shows a typical form of the histogram of the sum of the absolute differences (SAD) standardized (MAD) for a single image,
- Figure 2 shows, in the form of a block diagram, the structure of an estimator according to the invention,
- Figure 3 shows, again in the form of a block diagram, the possible application of the invention in a filtering loop with motion compensation, and
- Figure 4 is another diagram which shows the results of the estimate of the noise level carried out according to the invention with two different types of movement estimators.

Theoretical basis of the invention

In order to provide a clearer illustration of the characteristics of the invention, it appears to be advantageous to provide an introductory survey of the theoretical basis of the invention, particularly with reference to a simple mathematical model for a video sequence.

It will be assumed that the model is of the type $g(i, j, k) = f(i, j, k) + n(i, j, k)$

where g is the noisy image which is available, f is the original noise-free image, and n is the superimposed noise, which is assumed to be uncorrelated spatially, temporally and with respect to the signal. Clearly, the indices i and j identify the location of an individual pixel within the image, while k is the index which identifies the image within the sequence.

The noise level estimator according to the invention is based on the collection of the values of certain functions (calculated by the movement estimators as an integral part of the estimation process) which express the "local" difference between blocks of the current image and blocks of the preceding motion compensated image $g_{MC}$. A possible example of these functions is what is known as the sum of absolute differences or SAD, namely:

$$Z_x = \Sigma \left| g(i, j, k) - g_{MC}(i, j, k - 1) \right| \tag{1}$$

The summation is extended to all values of the indices i and j belonging to a set X. The set X can identify, for example, a squared block in the current image, and the differences are found between the pixels of this block (belonging to the k-th frame) and the corresponding pixels in the reference frame (the preceding one, for example) which is motion compensated.

Another function which can be used is the mean square error or MSE, namely:

$$Z_x = \Sigma \, [g(i, j, k) - g_{MC}(i, j, k - 1)]^2$$

In this case also, as in the subsequent homologous cases, the summation is extended to all values of i, j included in the set X.

At this point, let us assume - for the time being, simply to demonstrate the concepts - that the sequence is completely static.

In this case, equation (1) shown above is reduced (by the cancellation of the factors f relative to two successive images: these factors are identical to each other, since the sequence is static) to a difference between the noise factors only, in other words to an expression of the type

$$Z_x = \Sigma \, \left| n(i, j, k) - n_{MC}(i, j, k - 1) \right| \tag{2}$$

which is effectively equivalent to a local estimate of the noise level of the image.

If n is a Gaussian noise with a variance $\sigma^2_n$, uncorrelated in the three dimensions, $Z_x$ is the sum of absolute values of random variables with Gaussian probability density with a variance $2\sigma^2_n$.

From this information it is possible to deduce $\sigma_n$. The hypothesis of the absence of movement in the sequence is not verified in practice, but is useful for an understanding of the fundamental principle of the invention, since equation (2) would also be true in respect of a non-static sequence if the effects of the movement could be completely eliminated.

Therefore, if X were, for example, a 16 x 16 block, the local estimate of the noise level of the image represented by $Z_x$ would be the sum of 256 random variables $X_i$ with a distribution equal to that of the absolute value of a Gaussian curve with a variance of $2\sigma^2_n$ and a mean value of zero.

For the central limit theorem, if these 256 independent absolute values are assumed, $Z_x$ approximates to a Gaussian random variable with a mean value of:

$$E[Z_x] = 256 \cdot E[X_i] = 256 \cdot \sqrt{2\sigma_n} \cdot \sqrt{2/\pi} \cong 289\sigma_n \tag{3}$$

and a variance of:

$$\text{var} \, (Z_x) = 256 \cdot \text{var} \, (X_i) = 256 \cdot 0.363 \cdot 2\sigma^2_n \cong 186 \, \sigma^2_n \tag{4}$$

It is possible to envisage the use of these theoretical bases to derive the value of $\sigma_n$ or of a generic parameter correlated with it which expresses the noise level of the sequence.

In practice, movement is always present in a real sequence, and this increases the value of $Z_x$ on average.

The solution according to the invention overcomes these problems, providing a reliable estimate of the noise level $\sigma_n$ based on motion compensation.

For example, in the MPEG-2 standard, the estimation of the movement attempts to correlate 16 x 16 blocks of the current image with blocks of the same size of the preceding image. If the difference function between these blocks is calculated, the effect of the variation of the signal on $Z_x$ is considerably reduced, and thus the isolation of the information relating to the power of the noise is achieved.

This result can be obtained - as will be shown in greater detail in the following text - by using the sum of absolute differences (SAD) as the measurement of the difference between the blocks. For persons skilled in the art, however, it will be evident that the conclusions reached and the results obtained will be valid for any difference function which is used, and that, consequently, the invention is certainly not restricted to use with the SAD, but can be used with any other difference function, such as the mean square error (MSE) cited above.

The solution according to the invention is preferably based on the generation of the histograms of the values of the difference (in the following text, reference will be made virtually exclusively, by way of example, to the values of SAD) between blocks of the current image and the preceding motion compensated image, relating for example to one frame. Clearly, this is purely an example, since it is possible to provide estimates for different regions, for example smaller regions, of the image.

Provided that a sufficiently large number of differences are taken into account, these histograms represent the (empirical) distribution function of the value $Z_x$.

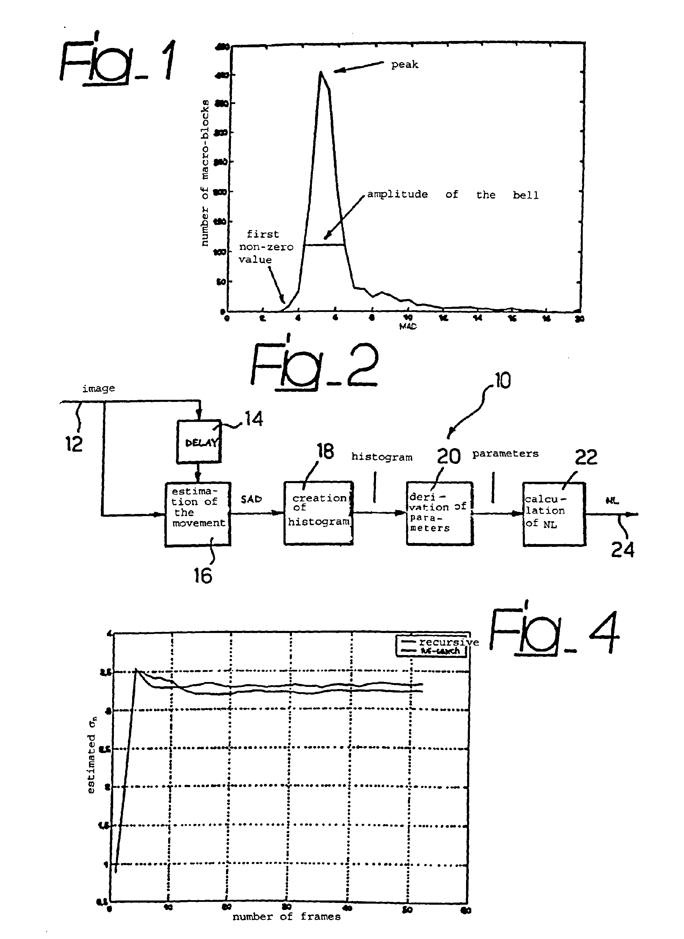

Figure 1 shows a typical histogram from which it is possible to derive parameters (such as the mean or variance of the distribution) which can then be correlated with $\sigma_n$; this can also be done according to the theoretical distribution of $Z_x$ (see equations 3 and 4 above) or by an empirical method.

More specifically, the histogram of Figure 1 is a histogram of the values of SAD standardized for the number of pixels in the block (MAD) relating to a single frame. The value indicated as the "first non-zero value" is the first value in the histogram corresponding to a number of macro-blocks other than zero. The peak value of the histogram is indicated as the "peak", while the "amplitude of the bell curve" is any parameter capable of indicating the dispersion of the distribution. Finally, "number of macro-blocks" indicates the number of blocks (16 x 16 blocks for example) which have the value of MAD shown on the horizontal axis.

The overall shape of the histogram is similar to a Gaussian curve. The right-hand part, however, has a longer tail than the left-hand part. This is due to the motion compensation, which in practical circumstances is never perfect, and produces values of SAD greater than expected. This is because a movement estimator based on block matching can exactly correlate two blocks only in the case of panning movement, if there are no variations of illumination in the scene.

If noise is present, then in practice no values of SAD below a certain threshold will be found. From the theoretical point of view, there could be values of this type, but with a probability close to zero: this happens because the movement estimator is able to correlate the signal (for example an object which moves), but certainly not the noise. This has a different configuration or pattern in the current frame from that in the motion compensated frame, and this means that the value of SAD cannot be lower than a certain value, which is proportional to (or at least correlated with) the power of the noise.

Another important value which can be found from the histogram is its mean. From this it is possible to deduce $\sigma_n$ by means of equation 3.

Another method for determining the mean, which is more reliable for some directions, consists in finding the value corresponding to the peak of the histogram (in other words, the most probable value). This is less affected than the sampling mean by an increase in $Z_x$ with respect to the theoretical predictions due to the imperfect correlation between the blocks.

Another parameter which can be derived from the distribution of the values SAD is $t_\alpha$, in other words the $\alpha$-percentile of the distribution, namely the number $t_\alpha$ such that the area subtended by the probability density to the left of $t_\alpha$ is equal to $\alpha$. For a variable with Gaussian distribution with a mean of $\mu$ and a variance $\sigma$, it is found, for example, that $t_{0.025} = \mu - 1.96\sigma$. If $Z_x$ is still assumed to have a Gaussian distribution, it is possible to express corresponding values of the mean and standard deviation of the distribution, and therefore also the value of $t_\alpha$, as a function of $\sigma_n$, in other words the standard deviation of the superimposed noise. Since $t_\alpha$ can easily be found from the empirical distribution of the values of SAD, it is possible to derive $\sigma_n$ from this.

The following is a practical example of this procedure:

$$t_{0.025} = \mu_{zx} - 1.96\cdot\sigma_{zx} = 289\sigma_n - 1.96\cdot\sqrt{186\sigma^2_n} = 262\sigma_n \Rightarrow \sigma_n = 3.82\cdot10^{-3}\cdot t_{0.025}$$

where $\mu_{zx}$ and $\sigma_{zx}$ represent, respectively, the mean value and the standard deviation of the distribution of the values of SAD.

## Detailed description of an embodiment of the invention

In Figure 2, a noise level estimator operating according to the invention is indicated as a whole by the number 10.

It receives on an input line 12 the video sequence to be processed, consisting of a sequence of sets of numerical data, each representing an image converted into numerical form.

The input signal is sent either directly or through a delay line 14 (whose delay value is normally correlated with the separation time interval between successive images) to a unit 16. This unit carries out the function of estimating the movement by generating a difference function such as the SAD function defined by equation 1 above. The estimator unit 16 is therefore capable of generating the values of the predetermined difference function (as stated several times previously, the SAD function is only one of the various possible choices) relative to one frame (or to a different set of data: as has been stated, it is possible to generate histograms relative to individual portions of the image, or to a plurality of frames).

On the basis of the data obtained from the unit 16, a unit 18 generates the histogram of the difference function with the predetermined granularity and supplies it to the input of a unit for deriving the parameters, indicated by 20. A finer granularity makes it possible to obtain a more accurate estimate, but requires a greater amount of memory to store the histogram.

The derivation unit 20 derives one or more parameters of the histogram and then transfers them to a processor unit 22 which, on the basis of the aforesaid parameters, finds the parameter NL (for example the value $\sigma_n$) which indicates the noise level, supplying it at the output on a line 24.

The criteria for the production of the individual units 14, 16, 18, 20 and 22 described above correspond to criteria which are known in the art and therefore do not require a detailed description in this document.

This is particularly true of the unit 16, which carries out the function of estimating the movement. This can be produced, for example, according to the criteria described in EP-A-0 917 363, which describes a movement estimator of the recursive type, or in the document "Test Model 5", ISO/IEC JTC1/SC29/WG11, Apr. 1993, relating to a full-search estimator used in the MPEG-2 reference encoder.

The units 20 and 22 are configured (in a known way) as a function of the parameter or parameters (for example the mean value, the value corresponding to the peak, the standard deviation, the $\alpha$-percentile, etc.) which are to be derived from the histogram (in relation to the unit 20) and of the parameter or parameters identifying the noise NL which are to be used (for example, $\sigma_n$) in relation to the unit 22. In this connection, reference should be made to the mathematical relations shown in the part of the present description concerned with the illustration of the fundamental theoretical principles of the invention.

In particular, in the case in which the parameter to be derived from the histogram is the $\alpha$-percentile of the distribution, the unit 18 must construct only a vector A[1..T] containing the T smallest values of the SAD function, where T is equal to the integer value closest to the product of [$\alpha$ • TOTAL NUMBER OF SAD]. The largest of the values contained in this vector (A[T]) forms an estimate $\tilde{t}_\alpha$ of the $t_\alpha$ which is to be found. Clearly, it is unnecessary to acquire all the SAD values and then order them to carry out these operations. This is because it is possible to insert the values of SAD, as they arrive, into the correct positions in the vector of S elements.

To increase the reliability of the estimate, it is possible to envisage finding the average of the values about the T-th value in the ordered arrangement, for example:

$$\tilde{t}_\alpha = \frac{1}{2x+1}\sum A[i]$$

where the summation is extended over all the values of i in the range from T-x to T+x.

Clearly, in this case a vector of T + x elements will be required. To further improve the reliability of the estimate, it is possible to find the average of the values of $\sigma_n$ estimated for a number of consecutive frames. This avoids the problems which can arise in the case of an incorrect estimate for a frame when $\sigma_n$ is used as the input for a filter. In this case, an unfiltered frame could suddenly appear within a correctly filtered sequence.

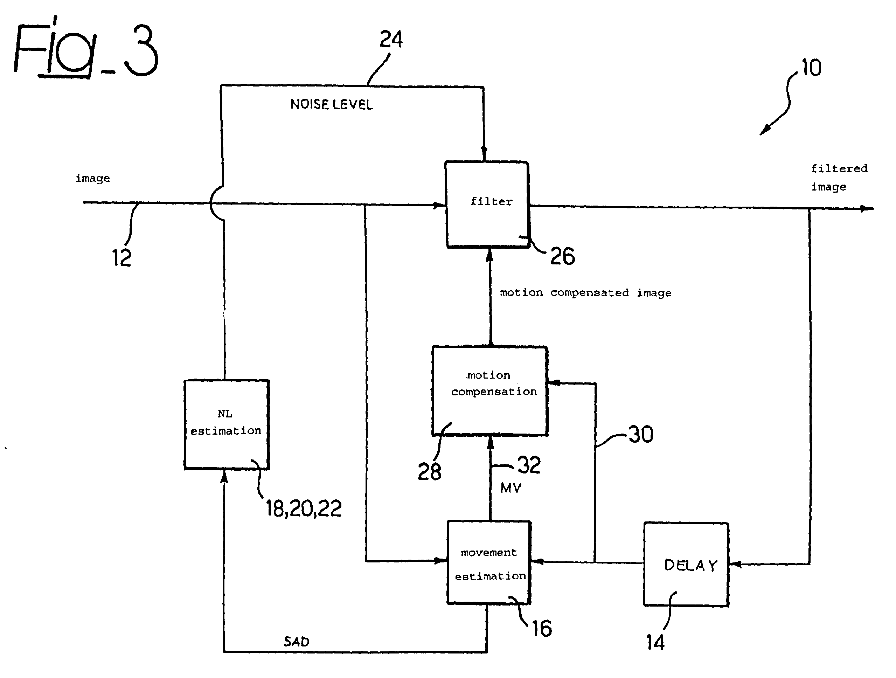

It is important to note that the accuracy of the estimator is not related to the particular type of movement estimator used. This will be more clearly understood in relation to the results of the estimate carried out within a motion compensated filtering loop having the structure shown in Figure 3.

In this case also, the estimator is indicated as a whole by 10, while the references 12 and 14 indicate respectively, in the same way as in Figure 2, the video sequence input line and the delay line 14 designed to supply the movement estimation unit 16.

In the case of the solution in Figure 3, the delay line 14 is not supplied directly from the input line 12: in this case, the image subjected to delay for the purpose of being supplied to the movement estimation device 16 is an image which has already been subjected to a filtering action in a unit 26. The unit 26 consists of a filter which acts on the image signal 12 (additionally) as a function of at least one parameter NL indicating the noise level present in a line 24 which, as in the case of the estimator in Figure 2, forms the output line of the units 18, 20 and 22 (combined in a single unit in the diagram in Figure 3) which operate on the output of the unit 16. The filter 26 also uses the delayed and motion compensated image received from the unit 28. The unit 28, having known characteristics, creates the motion compensated image from the reference image received from the delay line 14 along a line 30, on the basis of the movement fields MV, received from the unit 16 on a line 32.

Consequently, in the loop configuration in Figure 3, the estimation of the movement is carried out on the previously filtered frame, and at the same time the output of the noise level estimator is used as the parameter of the filter 26.

The diagram in Figure 4 shows the variation, as a function of the number of frames considered (horizontal axis), of the estimated value of $\sigma_n$ when each of two different movement estimators is used. These estimators correspond, in particular, to the solution described in EP-A-0 917 363 and to the solution used in the MPEG-2 reference encoder. These are, therefore, estimators to which reference has already been made above. The essential similarity of the results achieved will be understood.

CAPTIONS TO FIGURES:

Fig. 1:

Numero di macroblocchi = number of macro-blocks
picco = peak
ampiezza della campana = amplitude of the bell curve
primo valore non nullo = first non-zero value

Fig. 2:

Immagine = image
Stima del moto = estimation of the movement
Creazione istogramma = creation of histogram
Istogramma = histogram
Estrazione parametri = derivation of parameters
Parametri = parameters
Calcolo NL = calculation of NL

Fig. 3:

Immagine = image
Filtro = filter
Immagine filtrata = filtered image
Immagine MC = motion compensated image
Compens. del moto = motion compensation
Stima NL = NL estimation
Stima moto = movement estimation

Fig. 4:

ricorsivo = recursive
$\sigma_n$ stimato = estimated $\sigma_n$
Numero di trame = number of frames

**Claims**

1. Process for estimating the noise level (NL) present in a sequence of images, characterized in that it comprises the operations of:

   - producing a local estimate ($Z_x$) of the noise level of the said images,
   - creating the histogram of the said estimate,
   - deriving at least one parameter ($\mu_{zx}$, $\sigma_{zx}$, $t_\alpha$) from the said histogram, and
   - determining at least one parameter (NL) indicating the said noise level on the basis of the said at least one parameter derived from the said histogram.

2. Process according to Claim 1, characterized in that the said local estimate of the noise level of the image ($Z_x$) is obtained from sets of data (X) corresponding to a current image and to a motion compensated reference image respectively.

3. Process according to Claim 1 or Claim 2, characterized in that the said local estimate of the noise level is an estimate of the sum of absolute differences (SAD).

4. Process according to Claim 1 or Claim 2, characterized in that the said local estimate of the noise level is an estimate of mean square error or deviation (MSE).

**5.** Process according to any one of the preceding claims, characterized in that the said at least one parameter derived from the said histogram is selected from the group consisting of:

- the first non-zero value of the histogram,
- the mean value of the histogram,
- the value corresponding to the peak of the histogram,
- the standard deviation of the histogram,
- the $\alpha$-percentile of the histogram.

**6.** Process according to any one of the preceding claims, characterized in that the said at least one parameter (NL) indicating the noise level is determined from the said at least one parameter derived from the said histogram by calculation.

**7.** Process according to any one of the preceding Claims 1 to 5, characterized in that the said one parameter (NL) indicating the noise level is determined from the said at least one parameter derived from the said histogram on the basis of an empirical relation.

**8.** Process according to any one of the preceding claims, characterized in that it also comprises the operation of subjecting the said at least one parameter (NL) indicating the noise level to filtering, in order to avoid abrupt variations of the parameter in time.

**9.** Process according to any one of the preceding claims, characterized in that it the said local estimate ($Z_x$) of the noise level of the image is produced by comparing sets of data corresponding to individual frames, to individual portions of frames, or to a plurality of frames.

**10.** Process according to any one of the preceding claims, characterized in that the said local estimate of the noise level of the image is carried out on the basis of sets of data comprising data relating to an image which has previously been subjected to a filtering operation (26).

**11.** Process according to Claim 10, characterized in that it comprises the operation of modifying the parameters of the said filtering action (26) as a function of the said at least one parameter (NL) indicating the noise level.

**12.** Process according to Claim 10 or Claim 11, applied to the pre-processing of a signal subjected to MPEG-2 encoding, characterized in that the said filtering action is carried out on the signal subjected to encoding, and in that the said at least one parameter (NL) indicating the noise level is used for the purposes of the adjustment of the internal variables of the encoding process.

**13.** Device for estimating the level (NL) present in a sequence of images, characterized in that it comprises:

- an estimation unit (16) for producing a local estimate ($Z_x$) of the noise level of the said images,
- a unit (18) for generating the histogram of the said estimates,
- a unit (20) for deriving at least one parameter ($\mu_{zx}$, $\sigma_{zx}$, $t_\alpha$) from the said histogram, and
- a processing unit (22) for determining at least one parameter (NL) indicating the said noise level ($\sigma_n$) on the basis of the said at least one parameter derived from the said histogram.

**14.** Device according to Claim 13, characterized in that the said estimation unit (16) operates on sets of data (X) corresponding to a current image and to a motion compensated reference image respectively.

**15.** Device according to Claim 13, characterized in that the said estimation unit (16) produces an estimate of the sum of absolute differences (SAD).

**16.** Device according to Claim 13 or Claim 14, characterized in that the said estimation unit (16) produces an estimate of the mean square error or deviation (MSE).

**17.** Device according to any one of the preceding Claims 13 to 16, characterized in that the said derivation unit (20) operates on a parameter of the said histogram is selected from the group consisting of:

- the first non-zero value of the histogram,

- the mean value of the histogram,
- the value corresponding to the peak of the histogram,
- the standard deviation of the histogram,
- the $\alpha$-percentile of the histogram.

18. Device according to any one of the preceding Claims 13 to 17, characterized in that the said processing unit (22) determines the said parameter (NL) indicating the noise level from the said at least one parameter derived from the said histogram by calculation.

19. Device according to any one of the preceding Claims 13 to 17, characterized in that the said processing unit (22) determines the said parameter (NL) indicating the noise level from the said at least one parameter derived from the said histogram on the basis of an empirical relation.

20. Device according to any one of the preceding Claims 13 to 19, characterized in that the said processing unit (20) subjects the said at least one parameter (NL) indicating the noise level to filtering, in order to avoid abrupt variations of the parameter in time.

21. Device according to any one of the preceding Claims 13 to 20, characterized in that the said estimation unit (16) operates on sets of data corresponding to individual frames, individual portions of frames, or a plurality of frames.

22. Device according to any one of the preceding Claims 13 to 21, characterized in that the said estimation unit (16) operates on sets of data comprising data relating to a preceding image which has been subjected to a filtering operation (26).

23. Device according to Claim 22, characterized in that it comprises a filter (26) for carrying out the said filtering action, the parameters of the filtering action carried out by the said filter (26) being modifiable as a function of the said at least one parameter indicating the noise level determined by the said processing unit (22).

24. Device according to Claim 10 or Claim 11, incorporated in an MPEG-2 encoder for the pre-processing of a signal subjected to encoding, characterized in that the said filter (26) operates on the signal subjected to encoding, and the said at least one parameter (NL) indicating the noise level is used for the purposes of the adjustment of the internal variables of the encoding process.

*Fig_1*

*Fig_2*

*Fig_4*

Fig_3

**European Patent Office**

**EUROPEAN SEARCH REPORT**

Application Number

EP 00 83 0113

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 909 515 A (MAKRAM-EBEID SHERIF) 1 June 1999 (1999-06-01) * column 8, line 24 - column 9, line 55; figure 5 * --- | 1,4,9, 13,16,21 | H04N17/00 |
| X | US 5 764 307 A (KATSAGGELOS AGGELOS K ET AL) 9 June 1998 (1998-06-09) <br><br> * column 1, line 10 - line 24 * <br> * column 2, line 62 - column 3, line 13 * --- | 1,2,4,9, 13,14, 16,21 | |
| A | EP 0 779 742 A (RCA THOMSON LICENSING CORP) 18 June 1997 (1997-06-18) <br><br> * the whole document * --- | 2-4, 8-12, 14-16, 20-24 | |
| A | US 5 715 335 A (BIEZEN PAUL WILLEM ALBERT C ET AL) 3 February 1998 (1998-02-03) * column 6, line 34 - column 7, line 11 * ----- | 2,14 | |
| | | | **TECHNICAL FIELDS SEARCHED (Int.Cl.7)** |
| | | | H04N |

The present search report has been drawn up for all claims

| Place of search | Date of completion of the search | Examiner |
|---|---|---|
| THE HAGUE | 14 July 2000 | Yvonnet, J |

EP 1 126 729 A1

**ANNEX TO THE EUROPEAN SEARCH REPORT
ON EUROPEAN PATENT APPLICATION NO.**                    EP 00 83 0113

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2000

| Patent document cited in search report | | Publication date | Patent family member(s) | | Publication date |
|---|---|---|---|---|---|
| US 5909515 | A | 01-06-1999 | FR | 2736181 A | 03-01-1997 |
| | | | EP | 0751482 A | 02-01-1997 |
| | | | JP | 9147103 A | 06-06-1997 |
| US 5764307 | A | 09-06-1998 | AU | 689048 B | 19-03-1998 |
| | | | AU | 6275496 A | 18-02-1997 |
| | | | CA | 2200730 A | 06-02-1997 |
| | | | CN | 1159270 A | 10-09-1997 |
| | | | EP | 0791270 A | 27-08-1997 |
| | | | WO | 9704589 A | 06-02-1997 |
| EP 0779742 | A | 18-06-1997 | JP | 9205652 A | 05-08-1997 |
| US 5715335 | A | 03-02-1998 | DE | 69417216 D | 22-04-1999 |
| | | | DE | 69417216 T | 30-09-1999 |
| | | | EP | 0682841 A | 22-11-1995 |
| | | | WO | 9516322 A | 15-06-1995 |
| | | | JP | 8506474 T | 09-07-1996 |
| | | | US | 5742355 A | 21-04-1998 |

EPO FORM P0459

For more details about this annex : see Official Journal of the European Patent Office, No. 12/82

13